Europäisches Patentamt

European Patent Office

Office européen des brevets

(19)

(11) Veröffentlichungsnummer: **0 147 608 B2**

(12) **NEUE EUROPÄISCHE PATENTSCHRIFT**

(45) Veröffentlichungstag der neuen Patentschrift:
17.04.91 Patentblatt 91/16

(51) Int. Cl.$^5$: **C22B 34/12, C01G 23/053**

(21) Anmeldenummer: 84113925.6

(22) Anmeldetag: 17.11.84

(54) Verfahren zur Herstellung von Titandioxid.

(30) Priorität: 30.11.83 DE 3343256

(43) Veröffentlichungstag der Anmeldung:
10.07.85 Patentblatt 85/28

(45) Bekanntmachung des Hinweises auf die
Patenterteilung:
12.08.87 Patentblatt 87/33

(45) Bekanntmachung des Hinweises auf die
Entscheidung über den Einspruch:
17.04.91 Patentblatt 91/16

(84) Benannte Vertragsstaaten:
BE DE FR GB IT NL

(56) Entgegenhaltungen:
DE-C- 671 279
DE-C- 862 001
FR-A- 655 905
FR-A- 1 548 343

(56) Entgegenhaltungen:
US-A- 1 767 530
US-A- 1 889 027
US-A- 2 112 966
US-A- 2 180 961

(73) Patentinhaber: BAYER AG
W-5090 Leverkusen 1 Bayerwerk (DE)

(72) Erfinder: Gerken, Rudolf, Dr.
Rather Strasse 79
W-4150 Krefeld (DE)
Erfinder: Wiederhöft, Gerhard
Im Heggelsfeld 22
W-4150 Krefeld (DE)
Erfinder: Lailach, Günter, Dr.
Bodelschwinghstrasse 23
W-4150 Krefeld (DE)
Erfinder: Gutsche, Walter, Dr.
Johannes-Heynen-Strasse 16
W-4150 Krefeld (DE)
Erfinder: Müller, Wolfgang-Dieter, Dr.
Bodelschwinghstrasse 19
W-4150 Krefeld (DE)

EP 0 147 608 B2

## Beschreibung

Verfahren zur Herstellung von Titandioxid

Die vorliegende Erfindung betrifft ein Verfahren zur Herstellung von Titandioxid durch diskontinuierlichen autothermen Aufschluß von titanhaltigen Rohstoffen mit Schwefelsäure unter Bildung eines festen, relativ gut löslichen Aufschlußkuchens, Lösen der Metallsulfate aus diesem Kuchen mit Wasser oder verdünnter Schwefelsäure, Abtrennen der ungelösten Rückstände und gegebenenfalls nach einer Kristallisation von Eisensulfateptahydrat, Hydrolyse des Titanylsulfats und Kalzinieren des Titanoxidhydrats zu Titandioxid.

Gemäß dem Stand der Technik (Ullmanns Enzyklopädie, 4. Auflage 1979, Bd. 18, S. 574-576) ist beim autothermen Aufschluß von Titanrohstoffen, bei dem ein fester, relativ gut löslicher Aufschlußkuchen anfällt, der Einsatz von zumindest 88-92%iger Schwefelsäure bei Reaktionsbeginn erforderlich. Diese wird normalerweise durch Zugabe von Wasser oder Wasserdampf zu einem Gemisch aus 90--98%iger Schwefelsäure und dem gemahlenen $TiO_2$-Rohstoff erzeugt. Die Mischungswärme von Wasser und Schwefelsäure bewirkt dabei eine so starke Temperaturerhöhung, daß die exotherme Reaktion von $TiO_2$-Rohstoff und Schwefelsäure zu Metallsulfaten und Wasser gestartet wird. Die freiwerdende Reaktionswärme bewirkt eine Temperaturerhöhung der Mischung auf 170-220°C und die weitgehende Verdampfung des ursprünglich vorhandenen und des während der Reaktion gebildeten Wassers. Um den Aufschlußkuchen in einen relativ gut löslichen, porösen Zustand zu versetzen, wird beim diskontinuierlichen Aufschluß während der Reaktion ständig Luft durch die Masse geblasen.

Aus der FR-A 15 48 343 ist ein Verfahren zur Herstellung von Titandioxid durch Aufschluß von titanhaltigen Rohstoffen mit Schwefelsäure bekannt, wobei die Aufschlußreaktion in Gegenwart von Metallsulfaten mit ca. 60%iger Schwefelsäure unter Bildung einer Suspension durchgeführt wird.

Die US-A 2 112 966 beschreibt ein Verfahren zur Herstellung von Titandioxid durch Aufschluß von titanhaltigen Rohstoffen mit 80 bis 85%iger Schwefelsäure. Die notwendige Aufschlußtemperatur wird dabei durch das Einblasen von Dampf erzielt.

In der DE-C-862 001 wird ein Verfahren zur Herstellung von Titansulfatlösungen durch Aufschluß titanhaltiger Rohstoffe mit Schwefelsäure beschrieben, indem man zuerst konzentrierte Schwefelsäure zum Rohstoff gibt und anschließend zur Einleitung des Aufschlusses Wasser, verdünnte Schwefelsäure oder sogenannte Dünnsäure zusetzt.

Beim diskontinuierlichen Aufschluß ist die Ausbildung eines festen, gasdurchlässigen Kuchens äußerst wünschenswert. Wenn die Reaktionsmasse bei relativ hoher Temperatur noch zähflüssig ist, können sich Dampfblasen in der Masse bilden, deren plötzliche Entspannung explosionsartig, mit entsprechenden Folgen, vor sich gehen kann.

Im Rahmen einer umweltbewußten $TiO_2$-Produktion wird angestrebt, Dünnsäure, durch Eindampfung von Dünnsäure zurückgewonnene Schwefelsäure oder relativ verdünnte Schwefelsäure aus anderen Bereichen wie Abgasreinigungsanlagen, beim $TiO_2$-Rohstoffaufschluß nutzbringend einzusetzen. Mischt man 96-99%ige Schwefelsäure statt mit Wasser mit diesen Säuren, so ist deren einsetzbare Menge äußerst gering. Durch Mischen von Oleum und Säuren unter 75% $H_2SO_4$ können bereits merklich größere Mengen von Dünnsäuren oder mittelkonzentrierten Säuren eingesetzt werden. Es läßt sich aber leicht berechnen, daß ein wesentliches ökologisches Ziel, die Rückführung der gesamten Schwefelsäure aus der $TiO_2$-Dünnsäure, auf diese Weise nicht realisierbar ist, weil die Dünnsäure aus Gründen der Eisensulfatlöslichkeit sinnvollerweise nur bis 65% $H_2SO_4$ (salzfrei) eingedampft werden kann. Eine weitere Eindampfung der 65%igen Säure nach Abtrennung der Metallsulfate bedeutet einen erheblichen Aufwand.

Ziel der Erfindung ist es, ein Verfahren zur Verfügung zu stellen, das es erlaubt, den $TiO_2$-Rohstoffaufschluß mit geringerer Schwefelsäurekonzentration beim Reaktionsbeginn durchzuführen und trotzdem einen festen, gasdurchlässigen, gut löslichen Aufschlußkuchen beim diskontinuierlichen Aufschluß zu erhalten.

Überraschenderweise wurde nun gefunden, daß dieses Ziel dadurch erreicht werden kann, daß man die Aufschlußreaktion in Gegenwart von Metallsulfaten durchführt.

Gegenstand der Erfindung ist daher ein Verfahren zur Herstellung von Titandioxid durch diskontinuierlichen autothermen Aufschluß von titanhaltigen Rohstoffen mit Schwefelsäure unter Bildung eines festen, relativ gut löslichen Aufschlußkuchens, Lösen der Metallsulfate aus diesem Kuchen mit Wasser oder verdünnter Schwefelsäure, Abtrennen der ungelösten Rückstände und, gegebenenfalls von Eisensulfat-Heptahydrat nach dessen Kristallisation, Hydrolyse des Titanylsulfats und Kalzinieren des Titanoxidhydrats zu Titandioxid, wobei den titanhaltigen Rohstoffen Schwefelsäure und Metallsulfate in solchen Mengen zugegeben werden, daß das Reaktionsgemisch zu Beginn der Aufschlußreaktion 80-88%ige Schwefelsäure enthält, vor Reaktionsbeginn die Menge der Metallsulfate 2-25% beträgt und als Metallsulfate der bei der Filtration eingedampfter $TiO_2$-Dünnsäure anfallende Filterkuchen eingesetzt wird.

Durch Einstellen einer Konzentration von nur 80-88% $H_2SO_4$ statt 88-92% $H_2SO_4$ zu Beginn der Reaktion können wesentlich größere Mengen 20-75%iger Schwefelsäure als bisher beim $TiO_2$-Rohstoffaufschluß eingesetzt werden. Durch die Anwesenheit der Metallsulfate wird darüber hinaus bei diskontinuierlichen Aufschlüssen der Reaktionsverlauf anfangs verlangsamt, weiterhin die Konsistenz und Wasserlöslichkeit des ausgereiften Kuchens verbessert.

Die Menge der einzubringenden Metallsulfate ist in Vorversuchen für die jeweiligen $TiO_2$-Rohstoffe zu ermitteln. In einem weiten Bereich wird nur die Konsistenz des Aufschlußkuchens beeinflußt. Die Menge der zugesetzten Metallsulfate wird vorteilhaft auf die erforderliche Schwefelsäurekonzentration und die jeweiligen $TiO_2$-Rohstoffe abgestimmt. Erst bei relativ hohen Sulfatmengen zeigt sich eine deutliche Abnahme von $TiO_2$-Ausbeute, was wahrscheinlich auf unzureichenden Kontakt von Säure und $TiO_2$-Rohstoff infolge des Verdünnungseffektes der Metallsulfate oder auch auf die Verminderung der Maximaltemperatur beim Aufschluß zurückzuführen ist.

Aufgrund seines geringen Wassergehaltes ist der Einsatz von Eisensulfat-Monohydrat, wie es bei der Entwässerung von Eisensulfat-Heptahydrat anfällt, als Metallsulfat besonders von Vorteil.

Die zum Einsatz gebrachte 80-88%ige Schwefelsäure kann durch Mischen von 95-99%iger mit 20--75%iger oder auch, falls verfügbar, durch Mischen von Oleum mit 20-75%iger Schwefelsäure erfolgen. Gegebenenfalls kann also die Anwendung des erfindungsgemäßen Verfahrens eine Oleum-Anlage überflüssig machen.

Als 20-75%ige Schwefelsäure im Sinne dieser Erfindung eignen sich sogenannte $TiO_2$-Dünnsäure oder eingedampfte Dünnsäure, die gelöste Metallsulfate enthalten. Auch können andere 20-75%ige minderwertige Gebrauchssäuren eingesetzt werden.

Metallsulfate, insbesondere Eisensulfat, Aluminiumsulfat und Magnesiumsulfat, können in der 20--75%igen Schwefelsäure gelöst oder in fester Form suspendiert sein.

Eine besonders bevorzugte Ausführungsform des erfindungsgemäßen Verfahrens besteht darin, daß ein Teil der 20-75%igen Schwefelsäure und der Metallsulfate in Form der bei der $TiO_2$-Dünnsäure-Eindampfung gebildeten Metallsulfat-Schwefelsäure-Suspension eingesetzt wird.

Das Starten der Aufschlußreaktion kann auch bei salzhaltigen Reaktionsmischungen in der üblichen Art durch Einblasen von Dampf, Zugabe von Wasser oder freiwerdende Säuremischungswärme geschehen.

Die Vorteile des erfindungsgemäßen Verfahrens sollen durch die folgenden Beispiele demonstriert werden, ohne daß damit der Umfang der Erfindung bezüglich der eingesetzten Metallsulfate, der Säurekonzentration oder der $TiO_2$-Rohstoffe eingeschränkt wird.

### Beispiel 1 (Vergleichsbeispiel)

400 g gemahlenen Ilmenits (60,0% $TiO_2$, 9,3% FeO, 25,7% $Fe_2O_3$, 1,25% $Al_2O_3$, 0,5% MgO) wurden mit 754 g 96%iger Schwefelsäure in einem Dewar-Gefäß gemischt. Durch Zugabe von 68 g $H_2O$ wurde die Reaktion gestartet. Die rechnerische Schwefelsäurekonzentration lag zu diesem Zeitpunkt bei 88% $H_2SO_4$. Während der Reaktion wurden 500 l/h Luft durch die Mischung geblasen. Nach 12 min wurde die Mischung bei einer Temperatur von 180°C fest. Nach 13 min war die maximale Temperatur von 202°C erreicht. Nach einer Reifezeit von 3 h wurde der Kuchen zerkleinert und in Wasser gelöst. Zum vollständigen Lösen der Sulfate wurden 4 h benötigt. Die $TiO_2$-Ausbeute betrug 93,6%.

### Beispiel 2 (Vergleichsbeispiel)

Analog Beispiel 1 wurden 400 g Ilmenits mit 754 g 96%iger $H_2SO_4$ gemischt, aber nun mit 129 g $H_2O$ versetzt, so daß sich eine Startkonzentration von 82 % $H_2SO_4$ ergab. Die Mischung wurde erst nach 25 min bei 173°C fest, nachdem sie nach 13 min Reaktionsdauer bei 176°C ihr Temperaturmaximum erreicht hatte. Das Lösen des Kuchens erforderte 5 h. Die $TiO_2$-Ausbeute betrug nur 93,0%. Der späte Zeitpunkt des Festwerdens der Aufschlußmasse deutet auf die Gefahr der verpuffungsartigen Dampfblasenentspannung bei Betriebsaufschlüssen.

### Beispiel 3

400 g Ilmenits entsprechend dem des Beispiels 1 wurden mit 719,8 g 96%iger $H_2SO_4$, 117,6 g Filterkuchens aus eingedampfter Dünnsäure (27,9% $H_2SO_4$, 28,5% $FeSO_4$, 7,3% $Al_2(SO_4)_3$, 9,4% $MgSO_4$, 5,1% $TiOSO_4$) gemischt und mit 91,3 g $H_2O$ versetzt. Die Schwefelsäurekonzentration bei Reaktionsbeginn Betrug 84,0% $H_2SO_4$. Das Reaktionsgemisch wurde nach 9 min bei 169°C fest. Es erreichte nach 11 min das Temperaturmaximum bei 196°C. Nach 3 h Reifezeit wurde der Kuchen während 5 h in Wasser gelöst. Die $TiO_2$-Ausbeute (bezogen auf den eingesetzten Ilmenit) betrug 95,4 %.

### Beispiel 4

400 g des Ilmenits wurden mit 467,6 g rückgewonnener Schwefelsäure aus der Dünnsäureeindampfung [65% $H_2SO_4$, 4,0% ($MgSO_4$ + $Al_2(SO_4)_3$)] und 117,6 g Filterkuchens entsprechend Beispiel 3 gemischt. Durch Zusatz von 369,2 g 27 %igen Oleums wurde die Reaktion gestartet. Die $H_2SO_4$-Konzentration betrug dabei 82,0%. Das Reaktionsgemisch wurde nach 13 min bei 180°C fest. Gleichzeitig wurde das Temperaturmaximum erreicht.

Nach 3 h Reifezeit wurde der Aufschlußkuchen während 3,5 h in Wasser gelöst. Die TiO$_2$-Ausbeute (bezogen auf Ilmenit) betrug 94,5%.

## Ansprüche

1. Verfahren zur Herstellung von Titandioxid durch diskontinuierlichen autothermen Aufschluß von titanhaltigen Rohstoffen mit Schwefelsäure unter Bildung eines festen, relativ gut löslichen Aufschlußkuchens, Lösen der Metallsulfate aus diesem Kuchen mit Wasser oder verdünnter Schwefelsäure, Abtrennen der ungelösten Rückstände und, gegebenenfalls nach einer Kristallisation von Eisensulfat-Heptahydrat, Hydrolyse des Titanylsulfats und Kalzinieren des Titanoxidhydrats zu Titandioxid, wobei den titanhaltigen Rohstoffen Schwefelsäure und Metallsulfate in solchen Mengen zugegeben werden, daß das Reaktionsgemisch zu Beginn der Aufschlußreaktion 80 bis 88 %ige Schwefelsäure enthält, vor Reaktionsbeginn die Menge der Metallsulfate 2 bis 25% beträgt und als Metallsulfate der bei der Filtration eingedampfter TiO$_2$-Dünnsäure anfallende Filterkuchen eingesetzt wird.

2. Verfahren gemäß Anspruch 1, dadurch gekennzeichnet, daß als Metallsulfat durch Eisensulfat-Heptahydrat-Entwässerung gebildetes Eisensulfat-Monohydrat eingesetzt wird.

3. Verfahren gemäß einem der Ansprüche 1 oder 2, dadurch gekennzeichnet, daß die 80 bis 88%ige Schwefelsäure durch Mischen von 95 bis 99%iger und 20 bis 75%iger Schwefelsäure hergestellt wird.

4. Verfahren gemäß einem der Ansprüche 1 oder 2, dadurch gekennzeichnet, daß die 80 bis 88%ige Schwefelsäure durch Mischen von Oleum und 20 bis 75%iger Schwefelsäure hergestellt wird.

5. Verfahren gemäß einem der Ansprüche 3 oder 4, dadurch gekennzeichnet, daß die 20 bis 75%ige Schwefelsäure TiO$_2$-Dünnsäure oder eingedampfte TiO$_2$-Dünnsäure ist und Metallsulfate gelöst enthält.

6. Verfahren gemäß einem der Ansprüche 3 oder 4, dadurch gekennzeichnet, daß als 20 bis 75%ige Schwefelsäure minderwertige Gebrauchtsäuren eingesetzt werden.

7. Verfahren gemäß einem der Ansprüche 3 oder 4, dadurch gekennzeichnet, daß ein Teil der 20 bis 75%igen Schwefelsäure und der Metallsulfate in Form der bei der TiO$_2$-Dünnsäure-Eindampfung gebildeten Metallsulfat-Schwefelsäure-Suspension eingesetzt werden.

8. Verfahren gemäß einem der Ansprüche 3 bis 7, dadurch gekennzeichnet, daß die 20 bis 75%ige Schwefelsäure Metallsulfate in gelöster und in fester Form enthält.

## Claims

1. Process for the production of titanium dioxide by discontinuous autothermal digestion of titanium-containing raw materials with sulphuric acid with formation of a solid, relatively soluble digestion cake, dissolution of the metal sulphates from this cake with water or dilute sulphuric acid, separation of the undissolved residues, and optionally after crystallization of iron sulphate heptahydrate, hydrolysis of the titanium sulphate and calcination of the titanium oxide hydrate to titanium dioxide, the sulphuric acid and metal sulphates being added to the titanium-containing raw materials in such amounts that the reaction mixture at the start of the digestion reaction contains 80 to 88% sulphuric acid, the amount of the metal sulphates before the start of the reaction being 2 to 25% and the filter cake obtained from the filtration of TiO$_2$ dilute acid concentrated by evaporation being used as metal sulphates.

2. Process according to Claim 1, characterized in that iron sulphate monohydrate formed by dehydration of iron sulphate heptahydrate is used as metal sulphate.

3. Process according to one of Claims 1 or 2, characterized in that the 80 to 88% sulphuric acid is produced by mixing 95 to 99% and 20 to 75% sulphuric acids.

4. Process according to one of Claims 1 or 2, characterized in that the 80 to 88% sulphuric acid is produced by mixing oleum and 20 to 75% sulphuric acid.

5. Process according to one of Claims 3 or 4, characterized in that the 20 to 75% sulphuric acid is TiO$_2$ dilute acid or TiO$_2$ dilute acid concentrated by evaporation and contains dissolved metal sulphates.

6. Process according to one of Claims 3 or 4, characterized in that low-grade spent acids are used as the 20 to 75% sulphuric acid.

7. Process according to one of Claims 3 or 4, characterized in that a part of the 20 to 75% sulphuric acid and the metal sulphates is charged in the form of the metal sulphate-sulphuric acid suspension formed by the concentration by evaporation of the TiO$_2$ dilute acid.

8. Process according to one of Claims 3 to 7, characterized in that the 20 to 75% sulphuric acid contains metal sulphates in dissolved and in solid form.

## Revendications

1. Procédé pour la fabrication de dioxyde de titane par attaque autothermique discontinue de matières premières contenant du titane par l'acide sulfurique avec formation d'un gâteau d'attaque solide relativement bien soluble, dissolution des sulfates métalliques de ce gâteau par l'eau ou par l'acide sulfurique dilué, séparation des résidus non dissous et, le cas échéant après une cristallisation de sulfate de fer heptahydraté, hydrolyse du sulfate de titanyle et calcination de l'hydrate d'oxyde de titane en dioxyde de titane, dans lequel on ajoute aux matières premières contenant du titane de l'acide sulfurique et des sulfates métalliques en quantités telles que le mélange de réaction contienne au début de la réaction d'attaque de l'acide sulfurique à 80-88 % et que la quantité des sulfates métalliques avant le début de la réaction soit de 2 à 25 % et l'on utilise comme sulfates métalliques le gâteau de filtration formé au cours de la filtration de l'acide dilué de $TiO_2$ évaporé.

2. Procédé selon la revendication 1, caractérisé en ce que l'on utilise comme sulfate métallique le sulfate de fer monohydraté formé par déshydratation du sulfate de fer heptahydraté.

3. Procédé selon l'une des revendications 1 ou 2, caractérisé en ce que l'acide sulfurique à 80-88% est fabriqué par mélange d'acide sulfurique a 95-99% et d'acide sulfurique à 20-75%.

4. Procédé selon l'une des revendications 1 ou 2, caractérisé en ce que l'acide sulfurique à 80-88% est fabriqué par mélange d'oléum et d'acide sulfurique à 20-75%.

5. Procédé selon l'une des revendications 3 ou 4, caractérisé en ce que l'acide sulfurique à 20-75% est de l'acide dilué de $TiO_2$ ou de l'acide dilué de $TiO_2$ évaporé et contient des sulfates métalliques dissous.

6. Procédé selon l'une des revendications 3 ou 4, caractérisé en ce que l'on utilise comme acide sulfurique à 20-75% des acides usés de qualité inférieure.

7. Procédé selon l'une des revendications 3 ou 4, caractérisé en ce l'on utilise une partie de l'acide sulfurique à 20-75% et des sulfates métalliques sous forme de la suspension sulfates métalliques-acide sulfurique formée dans l'évaporation de l'acide dilué de $TiO_2$.

8. Procédé selon l'une des revendications 3 à 7, caractérisé en ce que l'acide sulfurique à 20-75% contient des sulfates métalliques sous forme dissoute et sous forme solide.